# EUROPEAN PATENT SPECIFICATION

(11) **EP 3 692 100 B1**
(45) Date of publication and mention of the grant of the patent: **20.10.2021**
(21) Application number: 18774068.3
(22) Date of filing: 01.10.2018
(51) Int. Cl.: C08L 67/02

(54) **CONTAINER MADE FROM POLYBUTYLENE TEREPHTHALATE HAVING A LOW OXYGEN PERMEABILITY**
BEHÄLTER AUS POLYBUTYLENTEREPHTHALAT MIT GERINGER SAUERSTOFFDURCHLÄSSIGKEIT
RÉCIPIENT FABRIQUÉ À PARTIR DE TÉRÉPHTALATE DE POLYBUTYLÈNE PRÉSENTANT UNE FAIBLE PERMÉABILITÉ À L'OXYGÈNE

(30) Priority: 02.10.2017 EP 17194342
(43) Date of publication of application: 12.08.2020
(73) Proprietor: BASF SE, 67056 Ludwigshafen am Rhein (DE); Point Plastic S.r.l., 03012 Anagni (FR) (IT)
(72) Inventor: KNIESEL, Simon, 67056 Ludwigshafen (DE); SEVERINI, Tonino, 03012 Anagni (IT)
(74) Representative: Féaux de Lacroix, Stefan
(86) International application number: PCT/EP2018/076563
(87) International publication number: WO 2019/068597

(56) References cited:
- EP-A1- 2 386 598
- WO-A2-2010/096459
- US-A1- 2016 122 530

## Description

The present invention relates to a container made from a thermoplastic molding composition based on polybutylene terephthalate which has a low oxygen permeability, the preparation and use of this container, a capsule comprising this container as well as a thermoplastic molding composition for preparing the container.

Many ingredients for preparing beverages are very sensitive to oxidation. This is especially true for the aroma constituents of coffee powder. For single portion coffee capsules, care has to be taken of this sensitivity to oxidation.

Different materials have been tried for preparing these coffee capsules. Aluminum is practically oxygen-tight, even at low layer thicknesses. Polypropylene capsules have typically an insufficient barrier for oxygen. Often, these capsules need to be packaged in aluminum foil additionally.

Multilayer capsules are prepared from multilayer foils in thermoforming processes.

WO 2012/126951 discloses corresponding multilayer foils based on polyethylene terephthalate (PET) layers which are combined with a barrier layer comprising polyethylene terephthalate, a salt of a transition metal and an oxidizable polyester-ether.

Other foil systems include a layer-sequence of PP/EvOH/PP. In this case, the polypropylene (PP) is necessary for the water vapor barrier and the vinyl alcohol polymer (EvOH) is necessary for the oxygen barrier.

US 6,455,620 relates to oxygen scavenging compositions comprising an oxidation catalyst and at least one specific polyether. The use of the oxygen scavenging composition in polyesters is also briefly mentioned. The examples of this document disclose among others a 5-layer film comprising an oxygen scavenging layer consisting of a mixture of PET, a polyester-polyether copolymer, a photoinitiator and an oxidation catalyst consisting of an organic cobalt compound. This oxygen scavenging layer is bonded by means of layers of adhesive to bi-oriented PET films, see example 34.

WO 2010/096459 A2 discloses resins for the production of food or beverage containers made from polyalkylene terephthalates. The alkylene polyethylene terephthalate is combined with e.g. a poly(tetramethylene-co-alkylene ether). Furthermore, it contains zinc acetate as the catalyst.

The use of polybutylene terephthalate for the production of the containers is not specifically disclosed.

EP 2 386 598 discloses the use of PBT, uses PET according to the examples, however, and PBT is listed as an alternative.

The use of polyacrylic acid for reducing the TOC emission, is disclosed in US 2016/0122530 A1, see the component D.

The reference discloses compositions containing a polybutylene terephthalate. It also mentions coffee capsules in paragraph [0173].

However, the organic polymers employed for preparing coffee capsules involve complicated secondary packaging or a complicated layer-sequence which often leads to failures upon preparation thereof.

Therefore, there is need for a container which can be prepared from a single-layer or one-layer organic material and which has a sufficient durability combined with sufficient oxygen barrier as well as a sufficient water vapor barrier.

Preferably, the container should also have a low total organic carbon emission (TOC) in order to make it consumer-safe and reduce emissions.

The object is achieved according to the present invention by a container made from a thermoplastic molding composition comprising
A) from 59.8 to 99.8% by weight of a polyester composed of from 30 to 100% by weight of a polybutylene terephthalate and 0 to 70% by weight of a polyester derived from 1,4-butanediol and a C₂₋₁₂-aliphatic dicarboxylic acid and/or C₆₋₁₂-cycloaliphatic dicarboxylic acid,
B) 0.1 to 10% by weight of an oxidizible polyester-ether,
C) 5 to 10000 weight-ppm of a salt of a transition metal,
D) 0 to 40% by weight of other additional substances,
where the total of the percentages by weight of components A) to B) is 100% by weight, and the intrinsic viscosity of the polybutylene terephthalate and of component A is in the range from 50 to 220 measured in 0.5 % by weight solution in a phenol-o-dichlorobenzene mixture of ratio by weight 1:1 at 25°C in accordance with ISO 1628.

The object is furthermore achieved by a process for producing this container by melt-mixing components A) to D) and forming the container from the melt.

The object is furthermore achieved by the use of the aforementioned container for packaging ingredients for making beverages.

The object is additionally achieved by a capsule comprising the aforementioned container containing ingredients for making beverages.

Additionally, the objection is achieved by a thermoplastic molding composition as defined above.

According to the present invention, it has been found that polybutylene terephthalate (PBT) has an excellent moldability and excellent material properties as well as a good barrier against water vapor and oxygen. The oxygen transmission rate (OTR) of polybutylene terephthalate is typically in the range of from 10 to 15 cc/m²/d/atm.

According to the present invention, this oxygen transmission rate could be reduced significantly by including an oxidizable polyester-ether and a salt of a transition metal in the polybutylene terephthalate molding composition. The oxidizable polyester-ether is an oxygen scavenger which is activated by melt-processing with the salt of a transmission metal in the polybutylene terephthalate. Since the thermoplastic molding composition can be prepared and used by melt-processing, the use of the thermoplastic molding composition is simple and needs no specific handling requirements, like storage under inert conditions.

The concept of including an oxidizable polyester-ether and a salt of a transition metal in a polyethylene terephthalate composition is known from WO 2012/126951. In this document, it is furthermore stated that the polyethylene terephthalate may contain up to 20% by moles of units deriving from other aromatic acids, such as isophthalic acid, naphthalenedicarboxylic acid and/or dioles, such as 1,4-butanediol and cyclohexanedimethanol.

However, there is no mention of thermoplastic molding compositions containing a major part of polybutylene terephthalate.

Polybutylene terephthalate (PBT) has a better flow behavior when injection-moulded than polyethylene terephthalate (PET) which is difficult to injection-mould.

Furthermore, after injection-moulding, PBT is more crystalline than PET. The OTR is therefore lower than the OTR for PET. Simultaneously, the above concept of including an oxidizable polyester-ether and a salt of a transition metal has a longer lasting effect in PBT compared to PET.

The addition of components B) and C) to the polyester component A) leads to a significantly decreased oxygen transmission rate.

Additionally, it has been found that by furthermore adding as additional substance from 0.01 to 2% by weight of an acrylic acid polymer, composed of from 70 to 100% by weight of acrylic acid and from 0 to 30% by weight of at least one other ethylenically unsaturated monomer copolymerizable with acrylic acid, selected from the group of monoethylenically unsaturated carboxylic acids, the additional substance preferably being polyacrylic acid, the amount of totally organic carbon (TOC) emissions could be reduced significantly.

In the thermoplastic molding composition employed according to the present invention, from 59.8 to 99.8% by weight, preferably 79.4 to 99.4% by weight, more preferably 89.2 to 99.2% by weight of component A) are employed.

The amount of component B) is 0.1 to 10% by weight, preferably 0.5 to 5% by weight, more preferably 0.7 to 3% by weight.

The amount of component C) is 5 to 10000 weight-ppm, preferably 100 to 5000 weight-ppm, more preferably 200 to 2000 weight-ppm.

The amount of other additional substances is 0 to 40% by weight, preferably 0 to 20% by weight, more preferably 0 to 10% by weight.

It is preferred that the least possible amount of other additional substances is employed. Among these substances, the above-mentioned acrylic acid polymer is most preferred. When used, its amount is 0.01 to 2% by weight, preferably 0.05 to 1.5% by weight, more preferably 0.1 to 1% by weight.

The total of the percentages by weight of components A) to D) is 100% by weight. If the acrylic acid polymer is employed, the upper limit of component A) is lowered by the lower limit of the acrylic acid polymer content, so that the total of the percentages by weight of components A) to D) is again 100% by weight. Here, the acrylic acid polymer is regarded as part of component D).

Component A) is a polyester composed of from 30 to 100% by weight of a polyethylene terephthalate and 0 to 70% by weight of a polyester derived from 1,4-butanediol and a C₂₋₁₂ aliphatic dicarboxylic acid and/or C₆₋₁₂-cycloaliphatic dicarboxylic acid. Preferably, 50 to 100% by weight, more preferably 80 to 100% by weight of a polybutylene terephthalate are employed and preferably 0 to 50% by weight, more preferably 0 to 20% by weight of a polyester derived from 1.4-butanediol and a C₂₋₁₂ aliphatic dicarboxylic acid and/or C₆₋₁₂ cycloaliphatic dicarboxylic acid. Most preferably, component A) is polybutylene terephthalate.

The polybutylene terephthalate and the other polyester can be produced in a manner known per se via reaction of aromatic dicarboxylic acids, aliphatic dicarboxylic acids or cycloaliphatic dicarboxylic acids, or their esters or ester-forming derivatives, with 1,4-butanediol.

Examples of aliphatic or cycloaliphatic dicarboxylic acids are adipic acid, azelaic acid, sebacic acid, dodecane dicarboxylic acid and cyclohexane dicarboxylic acid.

Polybutylene terephthalate may contain small amounts of aromatic dicarboxylic acids which differ from terephthalic acid. Examples thereof are 2,6-naphtalene dicarboxylic acid or isophthalic acid which can replace up to 20 mol%, preferably up to 10 mol%, specifically up to 5 mol% of the terephthalic acid units. Most preferably, only terephthalic acid units are present in the polybutylene terephthalate.

Furthermore, it is possible, that minor amounts of 1,4-butanediol can be replaced by 1,6-hexanediol and/or 2-methyl-1,5-pentanediol as other monomer units. The amount thereof should be less than 1% by weight, preferably less than 0.75% by weight of the diol units.

The intrinsic viscosity of the polybutylene terephthalate and of component A) is in the range from 50 to 220, preferably from 80 to 160 (measured in 0.5% by weight solution in a phenol-o-dichlorobenzene mixture (ratio by weight: 1:1 at 25°C) in accordance with ISO 1628). When the container according to the present invention is injection-molded, component A) preferably has a viscosity number in the range of from 70 to 130 cm³/g, more preferably in the range of from 75 to 115 cm³/g, specifically in the range of from 80 to 100 cm³/g.

The container can also be compression-molded.

The viscosity number is usually determined according to ISO 1628.

The terminal carboxyl group content of the polybutylene terephthalate is preferably up to 100 meq/kg PBT, preferably up to 50 meq/kg PBT, and in particular up to 40 meq/kg PBT. Polyethers of this type can be for example produced by the process as described in DE-A-44 01 055. Terminal carboxyl group content is usually determined by titration methods (e.g. potentiometry).

Particularly preferred polybutylene terephthalate are produced with Ti catalysts. Residual Ti content of these after the polymerization process is preferably less than 250 ppm, more preferably less than 200 ppm, most preferably less than 150 ppm.

Component B) is an oxidizable polyester-ether. The term "oxidizable polyester-ether" means that in the presence of an oxidation catalyst, oxygen coming from the surrounding air can be able to oxidize the polyester-ether. In this way, the oxygen coming from the surrounding air is scavenged, so that the polyester-ether functions as an oxygen scavenger.

Suitable polyester-ethers are generally known and described for example in WO 2012/126951.

The polyester-ether B) preferably comprises at least one polyether segment comprising poly(tetramethylene-co-alkylene ether), in which the alkylene group can be C₂ to C₄, for example poly(tetramethylene-co-ethylene ether). The molecular weight of the polyether segment can vary from approximately 200 g/mol to approximately 5000 g/mol, for example from approximately 1000 g/mol to approximately 3000 g/mol. The molar percentage of alkylene oxide in the polyether segment can be approximately 10 mol. % to approximately 90 mol. %, for example approximately 25 mol. % to approximately 75 mol. % or approximately 40 mol. % to approximately 60 mol. %. For use in preparation of the copolyester ether, the terminal group of the polyether segment is hydroxyl, for example it is a poly(tetramethylene-co-alkylene oxide) glycol which can be for example poly(tetramethylene-co-ethylene oxide) glycol or poly(tetramethylene-copropylene oxide) glycol. The tetramethylene ether group can be derived from tetrahydrofuran.

Other poly(alkylene oxide) glycols can be used in combination with the poly(tetramethylene-coalkylene oxide) glycols described above, for example poly(ethylene oxide) glycol, poly(trimethylene oxide) glycol, poly(tetramethylene oxide) glycol, poly(pentamethylene oxide) glycol, poly(hexamethylene oxide) glycol, poly(heptamethylene oxide) glycol, poly(octamethylene oxide) glycol or poly(alkylene oxide) glycols derived from monomers of cyclic ethers, for example derived from 2,3-didrofuran.

The copolyester ethers can contain the polyether segment in the interval from approximately 15% by weight to 95% by weight of the copolyester ether, for example approximately 25% by weight to approximately 75% by weight or approximately 30% by weight to approximately 70% by weight of the copolyester ether, using ethylene glycol, butanediol or propanediol as another glycol. The dicarboxylic acid can be terephthalic acid or dimethyl terephthalate. Antioxidants and photoinitiators can be added in polymerization to control initiation of the oxygen scavenging. Copolyesters-ethers as defined above are marketed for example by Eastman Chemical Company under the name ECDEL® 9967.

The total quantity of the copolyester ether in the final composition is chosen to guarantee the desired oxygen scavenging properties of the article formed by the composition. The quantities of copolyester ether can vary from 0.1 % by weight to 10% by weight of the total composition, preferably from 0.5% by weight to 5.0% by weight, more preferably from 0.7% by weight to 3.0% by weight of the total composition. The copolyester ether can be physically mixed with the polyester. Alternatively the poly(tetramethylene-co-alkylene oxide) glycol and the other poly(alkylene oxide) glycol can be copolymerised with the polyester.

The salt of the transition metal C) is an oxidation catalyst which activates and/or promotes oxidation of the copolyester-ether, so as to produce an active barrier to the passage of oxygen by means of oxygen scavenging.

The transition metal is in the form of salt and is chosen from the first, second or third series of the Periodic Table. Suitable transition metals are cobalt, copper, rhodium, ruthenium, palladium, tungsten, osmium, cadmium, silver, tantalum, hafnium, vanadium, titanium, chromium, nickel, zinc, manganese or their mixtures. Suitable counter-ions for the metal include, without limitation, carboxylates, such as neodecanoates, octanoates, stearates, acetates, naphthalates, lactates, maleates, acetylacetonates, linoleates, oleates, palmitates or 2-ethyl hexanoates, oxides, borates, carbonates, chlorides, dioxides, hydroxides, nitrates, phosphates, sulphates, silicates or their mixtures. For example, cobalt stearate and cobalt acetate are oxidation catalysts which can be used in the present invention.

The oxidation catalyst can be added during the polymerization or by preparation of a masterbatch with the oxidizable polymer or with the PBT included in the molding composition. The latter mode of adding the catalyst is preferred.

The amount of transition metal salt as oxidation catalyst ranges from 5 to 10000 weight-ppm, preferably from 100 to 5000 weight-ppm, more preferably from 200 to 2000 weight-ppm.

According to one embodiment of the invention, the thermoplastic molding composition is free from zinc compounds and especially the polybutylene terephthalate is not prepared by employing a zinc compound selected from the group consisting of zinc oxide, zinc hydroxide, zinc alkoxide, aliphatic acid salt of zinc, zinc acetate, zinc oxalate, zinc citrate, zinc carbonate, zinc halide and a complex compound of zinc; for example zinc acetate. Specifically the compositions do not contain any zinc acetate according to one embodiment of the invention.

The molding compositions can furthermore comprise additives chosen from the thermal and UV stabilizers, anti-blocking agents, antioxidants, antistatic agents, fillers and others known to persons skilled in the art. The additives can be added in the polymerization processes or in the subsequent transformation phases.

Oxidation retarders and heat stabilizers, UV stabilizers, colorants, plasticizers and fluorine-containing ethylene polymers are described in US 2016/0122530 in paragraphs [0151] to [0164].

Also dispersing aids like talcum can be used as component D). The amount of talcum is preferably in the range of from 0.02 to 1% by weight, more preferably 0.05 to 0.5% by weight, most preferably 0.07 to 0.2% by weight.

The aforementioned additives form part of the other additional substances which can be present as component D). Among these other additional substances, also additional thermoplastic polymers may be used which are different from the polyester A) and the oxidizable polyester-ether B). Possible additional thermoplastic polymers can be, for example, polyethylene terephthalate and acrylic acid polymers.

Among suitable other additional substances are also elastomeric polymers, often also termed impact modifiers, elastomers or rubbers. The amount of these elastomeric polymers, if present, is preferably 1 to 15% by weight. A description of suitable elastomeric polymers can be found in US 2016/0122530, specifically in paragraphs [0091] to [0137].

Preferably, no further thermoplastic polymers are present in the thermoplastic molding composition, apart from components A) and B). Thus, preferably component D) does not contain additional thermoplastic polymers.

However, as additional substance, the thermoplastic molding compositions preferably comprise from 0.01 to 2% by weight of an acrylic acid polymer, composed of from 70 to 100% by weight of acrylic acid and from 0 to 30% by weight of at least one other ethylenically unsaturated monomer copolymerizable with acrylic acid, selected from the group of monoethylenically unsaturated carboxylic acids, the additional substance preferably being polyacrylic acid. The amount of this additive is preferably 0.05 to 1.5% by weight, more preferably 0.1 to 1% by weight. This acrylic acid polymer helps to decrease the total organic carbon (TOC) emissions. This component is described for example in US 2016/0122530.

Preferably, the acrylic acid polymer is composed of from 90 to 100% by weight of acrylic acid and from 0 to 10% by weight of the at least one other ethylenically unsaturated monomer. Most preferably, the acrylic acid polymer is composed of 100% by weight of acrylic acid.

Preferred suitable monomers for copolymers are monoethylenically unsaturated carboxylic acids, such as methacrylic acid, maleic acid, fumaric acid, itaconic acid, mesaconic acid, methylenemalonic acid, and citraconic acid or a mixture of these.

Equally, forms in which the above-mentioned monomers comprising acid groups can be used in the polymerization reaction are that of the free acids or that of salts, e.g. the sodium salts, potassium salts, or ammonium salts.

The molar mass of the acrylic acid polymers of the invention is generally from 1000 to 100000 g/mol (M_{w} = weight-average molar mass).

It is preferable that the weight-average molar mass of the acrylic acid polymer is from 1000 to 12000 g/mol, preferably from 1500 to 8000 g/mol, and particularly preferably from 3500 to 6500 g/mol. The molar mass can be adjusted in a controlled manner within said ranges via the amount of regulator used.

The proportion of polymers with molar mass < 1000 g/mol is generally 10% by weight, preferably 5% by weight, based on the entire polymer.

The molar masses are determined by means of GPC on aqueous solutions of the polymers buffered to pH 7, using a hydroxyethyl methacrylate copolymer network as stationary phase and using sodium polyacrylate standards.

The polydispersity index of the acrylic acid polymer M_{w}/Mₙ is generally ≤ 2.5, preferably from 1.5 to 2.5, for example 2.

The K values, determined by the Fikentscher method on a 1% by weight solution in deionized water, are generally from 10 to 50, preferably from 15 to 35, and particularly preferably from 20 to 30.

In order to produce low-molecular-weight polyacrylic acids, molecular-weight regulators or chain-transfer agents are added during the free-radical polymerization of acrylic acid. Said regulators must be appropriate to the polymerization initiator, and also to the polymerization process. Examples of known initiators are inorganic and organic per-compounds, such as peroxodisulfates, peroxides, hydroperoxides, and peresters, azo compounds, such as 2,2'-azo-bisisobutyronitrile, and redox systems with inorganic and organic components. Regulators used often comprise inorganic sulfur compounds, such as hydrogensulfites, disulfites, and dithionites, organic sulfides, sulfoxides, sulfones, and mercapto compounds, such as mercaptoethanol, mercaptoacetic acid, and also inorganic phosphorus compounds, such as hypophosphorous acid (phosphinic acid), and salts thereof (e.g. sodium hypophosphite).

Processes for the production of acrylic acid polymers of this type are known by way of example from DE-A-19950941, and WO-A 2012/104401.

The pH of particularly preferred acrylic acid polymers is less than 4, in particular smaller than 3, i.e. the acrylic acid polymers used are preferably polymers that have been only partially neutralized or that have not been neutralized at all, i.e. either free acid groups are present or acid groups are present that have been neutralized only partially with alkali metal ions.

The use of fibers or particulate fillers among the other additional substances is less preferred. Otherwise, suitable fillers are described in US 2016/0122530 in paragraphs [0138] to [0150].

The thermoplastic molding composition is used according to the present invention for forming containers. Typically, these containers are injection-molded or compression-molded. The containers preferably have an oxygen permeability of less than 5 cc/m²/d/atm, preferably less than 3 cc/m²/d/atm, more preferably less than 1 cc/m²/d/atm at 1 mm thickness. The oxygen permeability is determined according to DIN 53360-3 of 1998.

The container according to the present invention preferably has a wall thickness of below 1 mm, more preferably below 0.7 mm. The filling volume of the container is preferably less than 250 ml, more preferably less than 100 ml, most preferably less than 50 ml.

The container according to the present invention is preferably used as a food or drink packaging.

Preferably, the container is used for packaging ingredients for making beverages. These ingredients can be for example coffee powder, tea powder, tea leaves, milk, milk powder, cocoa powder or soft drink components. Also other ingredients, like cacao powder or dried fruit pieces used for making fruit tea, can be considered.

The container can be closed after filling so that it is sealed. In order to achieve this, the container can additionally comprise a top film heat-sealable on said container or a top film glued to the container. This top film can be freely chosen. For example, the top film can be an aluminum foil, or a thermoplastic polymer.

Most preferably, the top film is made from the thermoplastic molding composition which is also used for making the container. This leads to a better recyclability of the whole container after use, since only one single material is employed.

Most preferably, the container is a capsule, for example a coffee capsule, which is widely used in coffee machines in which a single dosage unit of coffee is inserted in capsule form in the coffee machine.

In the container or capsule, the thermoplastic molding composition preferably comprises at least 79.4% by weight of component A), and the container or capsule has an oxygen permeability which is at least 30% lower than the oxygen permeability of a container made from component A) alone.

The invention also relates to a capsule comprising a container as described above containing the ingredients for making beverages.

Typical sizes of these capsules which are employed in e.g. coffee machines are known to the person skilled in the art.

According to the present invention, the container is made from one layer of the thermoplastic molding composition comprising components A) to D). Therefore, the multilayer compositions as disclosed in WO 2012/126951 can be avoided. This makes the process for preparing the container much simpler and more cost-effective.

It has been found that boiling water brought into contact with the container according to the present invention has no disadvantageous effect. The thermoplastic molding composition employed withstands the temperature of boiling water, and furthermore, no organic components of the container migrate into the water.

The containers according to the present invention are produced by melt-mixing components A) to D) and forming the container from the melt.

Different process sequences are possible. It is for example possible to dry-mix or melt-mix two or more of the components A) to D) prior to obtaining the final thermoplastic molding composition.

### Preferred processes include:

preparation of a master batch of component C) in polybutylene terephthalate by extrusion or melt-kneading,
b. melt-blending components A) and B) and optionally D),
c. dry-blending the materials from steps a. and b.,
d. injection-molding or compression-molding of the material of step c.,
or include
a. preparation of a master batch of component C) in polybutylene terephthalate by extrusion or melt-kneading,
b. dry-blending the master batch from step a. with component A), component B) and optionally component D),
c. injection-molding or compression-molding of the material of step b.,
or including
a. melt-mixing the components A) to D),
b. injection-molding or compression-molding of the material of step a.

It is also possible to introduce the different additives at different positions along the extruder.

Furthermore, it is possible to include components B), C) or the acrylic acid polymer forming part of component D) in the form of a master batch. For forming the master batch, the respective component is typically mixed with the polyester component A).

The PBT-based thermoplastic molding compositions are advantageous over PET molding compositions in that they can be injection-molded in an efficient and cost-effective manner, since PBT shows a fast crystallization upon cooling, whereas PET shows a much slower crystallization upon cooling and therefore is very cumbersome in injection-molding processes.

The invention is further illustrated by the following examples.

### Examples

The following components were used.

### Component A)

Polybutylene terephthalate (PBT) having a melt volume rate (MVR) of 110 cm³/10 min (in accordance with ISO 113 at 250°C and 2.16 kg) and a viscosity number of 86 ml/g (in accordance with ISO 1628). The material can be obtained from BASF SE, Germany (Ultradur® B1520 FC UN).

### Component B)

The polyester-polyether copolymer contains a fraction of polyether (polytetramethylene), equivalent to 25% by weight of the polyester-polyether copolymer. The IV of the copolymer in question was 0.961 dl/g (according to ASTM D4603). The polyester-ether can be obtained from Point Plastic S.R.L., Italy (Passipet® 112).

### Component C)

A 6.0% by weight cobalt stearate master batch based on polybutylene terephthalate (Ultradur® B2550 FC of BASF SE). The master batch can be obtained from Point Plastic S.R.L (Osmopet® 7128).

### Component D)

Polyacrylic acid having a molar mass of 5000 g/mol determined by gel permeation chromatography (GPC), a pH of 2 and a viscosity of 500 mPas. The polyacrylic acid is a 49% by weight solution in water and can be obtained from BASF SE (Sokalan® PA 25 X S).

Component A) was extruded with various additives in a twin-screw extruder at a melt temperature of from 265 to 275°C through 5 kg/h, and rotational speed of 300 min⁻¹.

Component D) was added by a pump and an injection vault in zone 4 of the extruder.

As an alternative, component D) (0.55% by weight) was premixed with component A) (99.45% by weight) to give the master batch Exp. 1.

The extruded material was then injection-molded to give plaques measuring 60 x 60 x 1.0 mm.

### Quantitative Emission Analysis

Quantitative emission analysis was carried out in accordance with VDA 277, a standard method of the German Association of the Automotive Industry (VDA) for the determination of TOC (= total organic carbon emission). VDA 277 is used to investigate the carbon emission of non-metallic materials used in motor vehicles. In this method, the injection-molded plaques, or the pellets after packaging, are comminuted and charged to a glass vessel, which is sealed. The specimen is then stored at 120°C for 5 hours. The gas volume above the specimen is then analyzed in the gas chromatograph (headspace GC). Emission is determined here in µg of carbon (TOC) per gram of specimen.

The oxygen permeability (OTR) was determined according to DIN 53380-9:1998-D7. The determination of the oxygen permeability followed an oxygen-specific carrier gas process with a MOCON OX-TRAN® at a temperature of 23°C. The relative humidity of measuring gas (oxygen) and carrier gas (forming gas) was 50%. All test specimens were conditioned prior to measuring for at least 72 h.

The tables show the constituents of the molding compositions and the results of the measurements.

**Table 1**

| | Reference | Comp. 1 | Comp. 2 | Exp. 2 | Exp. 3 | Exp. 4 |
|---|---|---|---|---|---|---|
| | [wt%] | [wt%] | [wt%] | [wt%] | [wt%] | [wt%] |
| Ultradur® B1520 FC UN | 100 | 99.9 | | 97.90 | 95.90 | |
| Exp. 1 | | | 99.9 | | | 95.90 |
| Osmopet® 7128 | | | | 1 | 2 | 2 |
| Passipet® 112 | | | | 1 | 2 | 2 |
| Talcum | | 0.1 | 0.1 | 0.1 | 0.1 | 0.1 |

**Table 2 (TOC)**

| **Composition** | **TOC VDA 277 [ppm]** |
|---|---|
| Reference | 187 |
| Comp. 1 | 163 |
| Comp. 2 | 31 |
| Exp. 2 | 134 |
| Exp. 3 | 155 |
| Exp. 4 | 59 |

**Table 3 (Oxygen Transmission Rate (OTR))**

| **Composition** | **OTR [cc/m²/d/atm]** |
|---|---|
| Reference | 1.49 |
| Comp. 1 | 1.16 |
| Comp.2 | 1.19 |
| Exp. 2 | 0.12 |
| Exp. 3 | < 0.05 |
| Exp. 4 | < 0.05 |

It is evident from table 2 that by using polyacrylic acid, the TOC value can be reduced significantly. This reduction can also be obtained in combination with components B) and C).

Table 3 shows that the OTR can be very significantly lowered (in experiments 3 and 4, two values of lower than 0.05) by employing 1200 weight ppm cobalt stearate through component C).

## Claims

1. Container made from a thermoplastic molding composition comprising
A) from 59.8 to 99.8% by weight of a polyester composed of from 30 to 100% by weight of a polybutylene terephthalate and 0 to 70% by weight of a polyester derived from 1,4-butanediol and a C₂₋₁₂-aliphatic dicarboxylic acid and/or C₆₋₁₂-cycloaliphatic dicarboxylic acid,
B) 0.1 to 10% by weight of an oxidizable polyester-ether,
C) 5 to 10000 weight-ppm of a salt of a transition metal,
D) 0 to 40% by weight of other additional substances,
where the total of the percentages by weight of components A) to B) is 100% by weight, and the intrinsic viscosity of the polybutylene terephthalate and of component A is in the range from 50 to 220 measured in 0.5 % by weight solution in a phenol-o-dichlorobenzene mixture of ratio by weight 1:1 at 25° C in accordance with ISO1628.

2. Container according to claim 1, wherein component A) is polybutylene terephthalate.

3. Container according to claim 1 or 2, wherein component B) comprises at least one polyether segment comprising poly(tetramethylene-co-alkylene ether), in which the alkylene group is a C₂-C₄ alkylene group.

4. Container according to one of claims 1 to 3, wherein the metal of component C) is chosen from the first, second or third periods of the periodic table of the elements, preferably cobalt.

5. Container according to one of claims 1 to 4, comprising as additional substance from 0.01 to 2% by weight of an acrylic acid polymer, composed of from 70 to 100% by weight of acrylic acid and from 0 to 30% by weight of at least one other ethylenically unsaturated monomer copolymerizable with acrylic acid, selected from the group of monoethylenically unsaturated carboxylic acids, the additional substance preferably being polyacrylic acid.

6. Container according to one of claims 1 to 5, which is injection-molded and wherein preferably component A) has a viscosity number in the range of from 70cm³/g to 130 cm³/g, determined according to ISO 1628.

7. Container according to one of claims 1 to 5, which is compression-molded.

8. Container according to one of claims 1 to 7, which has a wall thickness of below 1 mm, preferably below 0.7 mm.

9. Container according to one of claims 1 to 8, which has an oxygen permeability of less than 5 cc/m²/d/atm, preferably less than 3 cc/m²/d/atm, more preferably less than 1 cc/m²/d/atm at 1 mm thickness, determined according to DIN 53380-9:1998-D7.

10. Container according to one of claims 1 to 9, which has a filling volume of less than 250 ml, preferably less than 100 ml, more preferably less than 50 ml.

11. Container according to one of claims 1 to 10, which is in the form of a capsule, preferably a capsule for containing ingredients for making beverages.

12. Container according to claim 11, wherein the thermoplastic molding composition comprises at least 79.4% by weight of component A), and wherein the container has an oxygen permeability which is at least 30% lower than the oxygen permeability of a container made from component A) alone.

13. Container according to one of claims 1 to 12, wherein the thermoplastic molding composition does not contain any zinc acetate and preferably is free from zinc compounds and especially the polybutylene terephthalate is not prepared by employing a zinc compound selected from the group consisting of zinc oxide, zinc hydroxide, zinc alkoxide, aliphatic acid salt of zinc, zinc carbonate, zinc halide and a complex compound of zinc.

14. A process for producing a container according to one of claims 1 to 13 by melt-mixing components A) to D) and forming the container from the melt.

15. The process of claim 14, including:
a. preparation of a master batch of component C) in polybutylene terephthalate by extrusion or melt-kneading,
b. melt-blending components A) and B) and optionally D),
c. dry-blending the materials from steps a. and b.,
d. injection-molding or compression-molding of the material of step c.
or including
a. preparation of a master batch of component C) in polybutylene terephthalate by extrusion or melt-kneading,
b. dry-blending the master batch from step a. with component A), component B) and optionally component D),
c. injection-molding or compression-molding of the material of step b.,
or including
a. melt-mixing the components A) to D),
b. injection-molding or compression-molding of the material of step a.

16. The use of a container according to one of claims 1 to 13 for packaging ingredients for making beverages.

17. A capsule comprising a container according to one of claims 1 to 13 containing ingredients for making beverages.

18. A capsule according to claim 17,
wherein the ingredients are coffee powder, tea powder,
tea leaves, milk, milk powder, cocoa powder or soft drink components.

19. A thermoplastic molding composition as defined in one of claims 1 to 5.

## Patentansprüche

1. Behälter, hergestellt aus einer thermoplastischen Formmasse, umfassend
A) 59,8 bis 99,8 Gew.-% eines Polyesters aus 30 bis 100 Gew.-% eines Polybutylenterephthalats und 0 bis 70 Gew.-% eines Polyesters, der sich von 1,4-Butandiol und einer aliphatischen C₂₋₁₂-Dicarbonsäure und/oder cycloaliphatischen C₆₋₁₂-Dicarbonsäure ableitet,
B) 0,1 bis 10 Gew.-% eines oxidierbaren Polyester-ethers,
C) 5 bis 10.000 Gew.-ppm eines Salzes eines Übergangsmetalls,
D) 0 bis 40 Gew.-% weiterer Zusatzstoffe,
wobei die Summe der Gewichtsprozente der Komponenten A) bis B) 100 Gew.-% beträgt und die in 0,5 gew.-%iger Lösung in einer Phenol-o-Dichlorbenzol-Mischung im Gewichtsverhältnis 1:1 bei 25 °C gemäß ISO 1628 gemessene intrinsische Viskosität des Polybutylenterephthalats und von Komponente A im Bereich von 50 bis 220 liegt.

2. Behälter nach Anspruch 1, wobei es sich bei Komponente A) um Polybutylenterephthalat handelt.

3. Behälter nach Anspruch 1 oder 2, wobei Komponente B) mindestens ein Polyethersegment umfasst, das Poly(tetramethylen-co-alkylenether) umfasst, wobei es sich bei der Alkylengruppe um eine C₂-C₄-Alkylengruppe handelt.

4. Behälter nach einem der Ansprüche 1 bis 3, wobei das Metall von Komponente C) aus der ersten, zweiten oder dritten Periode des Periodensystems der Elemente, vorzugsweise Cobalt, ausgewählt ist.

5. Behälter nach einem der Ansprüche 1 bis 4, umfassend als Zusatzstoffe 0,01 bis 2 Gew.-% eines Acrylsäurepolymers aus 70 bis 100 Gew.-% Acrylsäure und 0 bis 30 Gew.-% mindestens eines anderen mit Acrylsäure copolymerisierbaren ethylenisch ungesättigten Monomers, ausgewählt aus der Gruppe der monoethylenisch ungesättigten Carbonsäuren, wobei es sich bei dem Zusatzstoff vorzugsweise um Polyacrylsäure handelt.

6. Behälter nach einem der Ansprüche 1 bis 5, der spritzgegossen ist, wobei vorzugsweise Komponente A) eine gemäß ISO 1628 bestimmte Viskositätszahl im Bereich von 70 cm³/g bis 130 cm³/g aufweist.

7. Behälter nach einem der Ansprüche 1 bis 5, der verpresst ist.

8. Behälter nach einem der Ansprüche 1 bis 7, der eine Wanddicke unter 1 mm, vorzugsweise unter 0,7 mm, aufweist.

9. Behälter nach einem der Ansprüche 1 bis 8, der eine gemäß DIN 53380-9:1998-D7 bestimmte Sauerstoffdurchlässigkeit von weniger als 5 cm³/m²/d/atm, vorzugsweise weniger als 3 cm³/m²/d/atm, weiter bevorzugt weniger als 1 cm³/m²/d/atm, bei einer Dicke von 1 mm aufweist.

10. Behälter nach einem der Ansprüche 1 bis 9, der ein Füllvolumen von weniger als 250 ml, vorzugsweise weniger als 100 ml, weiter bevorzugt weniger als 50 ml, aufweist.

11. Behälter nach einem der Ansprüche 1 bis 10, der in Form einer Kapsel, vorzugsweise einer Kapsel zur Aufnahme von Bestandteilen zur Herstellung von Getränken, vorliegt.

12. Behälter nach Anspruch 11, wobei die thermoplastische Formmasse mindestens 79,4 Gew.-% Komponente A) umfasst und wobei der Behälter eine Sauerstoffdurchlässigkeit aufweist, die mindestens 30 % kleiner ist als die Sauerstoffdurchlässigkeit eines ausschließlich aus Komponente A) hergestellten Behälters.

13. Behälter nach einem der Ansprüche 1 bis 12, wobei die thermoplastische Formmasse kein Zinkacetat enthält und vorzugsweise frei von Zinkverbindungen ist und insbesondere das Polybutylenterephthalat nicht durch Verwendung einer Zinkverbindung aus der Gruppe bestehend aus Zinkoxid, Zinkhydroxid, Zinkalkoxid, Zinksalz einer aliphatischen Säure, Zinkcarbonat, Zinkhalogenid und einer Komplexverbindung von Zink hergestellt wird.

14. Verfahren zur Herstellung eines Behälters nach einem der Ansprüche 1 bis 13 durch Schmelzemischen der Komponenten A) bis D) und Formen des Behälters aus der Schmelze.

15. Verfahren nach Anspruch 14, enthaltend:
a. Herstellung eines Masterbatch von Komponente C) in Polybutylenterephthalat durch Extrusion oder Schmelzekneten,
b. Schmelzemischen der Komponenten A) und B) und gegebenenfalls D),
c. Trockenmischen der Materialien aus den Schritten a. und b.,
d. Spritzgießen oder Verpressen des Materials aus Schritt c.,
oder enthaltend
a. Herstellung eines Masterbatch von Komponente C) in Polybutylenterephthalat durch Extrusion oder Schmelzekneten,
b. Trockenmischen des Masterbatch aus Schritt a. mit Komponente A), Komponente B) und gegebenenfalls Komponente D),
c. Spritzgießen oder Verpressen des Materials aus Schritt b.,
oder enthaltend
a. Schmelzemischen der Komponenten A) bis D),
b. Spritzgießen oder Verpressen des Materials aus Schritt a.

16. Verwendung eines Behälters nach einem der Ansprüche 1 bis 13 zur Verpackung von Bestandteilen zur Herstellung von Getränken.

17. Kapsel, umfassend einen Behälter nach einem der Ansprüche 1 bis 13, der Bestandteile zur Herstellung von Getränken enthält.

18. Kapsel nach Anspruch 17, wobei es sich bei den Bestandteilen um Kaffeepulver, Teepulver, Teeblätter, Milch, Milchpulver, Kakaopulver oder Erfrischungsgetränkekomponenten handelt.

19. Thermoplastische Formmasse gemäß Definition in einem der Ansprüche 1 bis 5.

## Revendications

1. Récipient fait d'une composition de moulage thermoplastique comprenant
A) de 59,8 à 99,8 % en poids d'un polyester composé de 30 à 100 % en poids d'un poly(téréphtalate de butylène) et de 0 à 70 % en poids d'un polyester issu de 1,4-butanediol et d'un acide dicarboxylique aliphatique en C₂₋₁₂ et/ou d'un acide dicarboxylique cycloaliphatique en C₆₋₁₂,
B) 0,1 à 10 % en poids d'un polyester-éther oxydable
C) 5 à 10 000 ppm en poids d'un sel d'un métal de transition,
D) 0 à 40 % en poids d'autres substances supplémentaires,
où le total des pourcentages en poids des composants A) à B) est de 100 % en poids, et la viscosité intrinsèque du poly(téréphtalate de butylène) et du composant A est dans la plage de 50 à 220 mesurée dans une solution à 0,5 % en poids dans un mélange de phénol-o-dichlorobenzène de rapport en poids 1 : 1 à 25 °C conformément à la norme ISO 1628.

2. Récipient selon la revendication 1, le composant A) étant un poly(téréphtalate de butylène).

3. Récipient selon la revendication 1 ou 2, le composant B) comprenant au moins un segment polyéther comprenant un poly(tétraméthylène-coéther d'alkylène), dans lequel le groupe alkylène est un groupe alkylène en C₂-C₄.

4. Récipient selon l'une des revendications 1 à 3, le métal du composant C) étant choisi parmi les première, deuxième et troisième périodes du tableau périodique des éléments, préférablement le cobalt.

5. Récipient selon l'une des revendications 1 à 4, comprenant en tant que substance supplémentaire de 0,01 à 2 % en poids d'un polymère d'acide acrylique, composé de 70 à 100 % en poids d'acide acrylique et de 0 à 30 % en poids d'au moins un autre monomère éthyléniquement insaturé copolymérisable avec l'acide acrylique, choisi dans le groupe des acides carboxyliques monoéthyléniquement insaturés, la substance supplémentaire étant préférablement un poly(acide acrylique).

6. Récipient selon l'une des revendications 1 à 5, qui est moulé par injection et préférablement le composant A) possédant un indice de viscosité dans la plage allant de 70 cm³/g à 130 cm³/g, déterminé selon la norme ISO 1628.

7. Récipient selon l'une des revendications 1 à 5, qui est moulé par compression.

8. Récipient selon l'une des revendications 1 à 7, qui possède une épaisseur de paroi inférieure à 1 mm, préférablement inférieure à 0,7 mm.

9. Récipient selon l'une des revendications 1 à 8, qui possède une perméabilité à l'oxygène inférieure à 5 cm³/m²/j/atm, préférablement inférieure à 3 cm³/m²/j/atm, plus préférablement inférieure à 1 cm³/m²/j/atm à 1 mm d'épaisseur, déterminée selon la norme DIN 53380-9:1998-D7.

10. Récipient selon l'une des revendications 1 à 9, qui possède un volume de remplissage inférieur à 250 ml, préférablement inférieur à 100 ml, plus préférablement inférieur à 50 ml.

11. Récipient selon l'une des revendications 1 à 10, qui est sous la forme d'une capsule, préférablement une capsule pour contenir des ingrédients pour préparer des boissons.

12. Récipient selon la revendication 11, la composition de moulage thermoplastique comprenant au moins 79,4 % en poids de composant A), et le récipient possédant une perméabilité à l'oxygène qui est au moins 30 % inférieure à la perméabilité à l'oxygène d'un récipient fait du composant A) seul.

13. Récipient selon l'une des revendications 1 à 12, la composition de moulage thermoplastique ne contenant pas d'acétate de zinc et préférablement étant exempte de composés du zinc et notamment le poly(téréphtalate de butylène) n'étant pas préparé en employant un composé du zinc choisi dans le groupe constitué par l'oxyde de zinc, l'hydroxyde de zinc, un alcoxyde de zinc, un sel d'acide aliphatique de zinc, le carbonate de zinc, un halogénure de zinc et un composé de complexe du zinc.

14. Procédé pour la production d'un récipient selon l'une des revendications 1 à 13 en mélangeant à l'état fondu les composants A) à D) et en mettant en forme le récipient à partir de la masse fondue.

15. Procédé selon la revendication 14, comprenant :
a. la préparation d'un mélange maître du composant C) dans un poly(téréphtalate de butylène) par extrusion ou malaxage de masse fondue,
b. l'assemblage à l'état fondu des composants A) et B) et éventuellement D),
c. l'assemblage à sec des matériaux des étapes a. et b.,
ou comprenant
a. la préparation d'un mélange maître du composant C) dans un poly(téréphtalate de butylène) par extrusion ou malaxage de masse fondue,
b. l'assemblage à sec du mélange maître de l'étape a., avec le composant A), le composant B) et éventuellement le composant D),
c. le moulage par injection ou le moulage par compression du matériau de l'étape b.,
ou comprenant
a. le mélange à l'état fondu des composants A) à D) ,
b. le moulage par injection ou le moulage par compression du matériau de l'étape a.

16. Utilisation d'un récipient selon l'une des revendications 1 à 13 pour l'emballage d'ingrédients pour préparer des boissons.

17. Capsule comprenant un récipient selon l'une des revendications 1 à 13 contenant des ingrédients pour préparer des boissons.

18. Capsule selon la revendication 17, les ingrédients étant de la poudre de café, de la poudre de thé, des feuilles de thé, du lait, de la poudre de lait, de la poudre de cacao ou des composants de sodas.

19. Composition de moulage thermoplastique telle que définie dans l'une des revendications 1 à 5.
